Europäisches Patentamt

**European Patent Office**

Office européen des brevets

(19)

(11) Publication number: **0 108 263**
**B1**

## (12) EUROPEAN PATENT SPECIFICATION

(45) Date of publication of patent specification: **22.04.87**

(51) Int. Cl.⁴: **F 16 D 65/56**

(21) Application number: **83110010.2**

(22) Date of filing: **06.10.83**

(54) Staked adjuster sleeve.

(30) Priority: **01.11.82 US 437981**

(43) Date of publication of application:
**16.05.84 Bulletin 84/20**

(45) Publication of the grant of the patent:
**22.04.87 Bulletin 87/17**

(84) Designated Contracting States:
**BE CH DE FR GB IT LI NL SE**

(56) References cited:
**EP-A-0 050 945**
**FR-A-1 373 335**
**FR-A-2 454 559**
**GB-A-1 567 345**
**US-A-3 037 584**
**US-A-3 068 964**
**US-A-3 570 632**
**US-A-3 599 762**
**US-A-3 797 613**
**US-A-3 822 003**
**US-A-4 064 973**

(73) Proprietor: **Rockwell International Corporation**
**600 Grant Street**
**Pittsburgh Pennsylvania 15219 (US)**

(72) Inventor: **Crewson, Gary Edward**
**6895 Oakhill Road**
**Clarkston Michigan 48016 (US)**
Inventor: **Dubiel, Mary Lynn**
**28199 Eleven Mile Road**
**Farmington Michigan 48018 (US)**

(74) Representative: **Leiser, Gottfried, Dipl.-Ing. et al**
**Patentanwälte Prinz, Leiser, Bunke & Partner**
**Manzingerweg 7**
**D-8000 München 60 (DE)**

Courier Press, Leamington Spa, England.

## Description

The present invention relates to automotive vehicle brakes and more specifically, to an automatic brake adjusting mechanism for a wedge actuated brake for heavy duty service on trucks and coaches.

In wedge actuated brakes the brake shoes are moved outwardly into engagement with the friction surface of a surrounding brake drum by forcing a wedge between the adjacent ends of a pair of axially aligned plungers disposed between the ends of a pair of brake shoes. The wedge is mounted in such a manner as to permit it to float slightly with its position between the plungers being partly determined by reaction forces exerted on the wedge by the plungers. Examples of such brake mechanisms are illustrated in US—A—3,037,584 and US—A—3,599,762. Such brake mechanisms are manufactured in sizes ranging from 381 mm (15") to 1067 mm (42") in diameter with the larger sizes used primarily for off-highway vehicles.

These brakes are subject to tremendous loads due to the size of the vehicles and the loads they carry. This results in relatively rapid wear of the brake shoe linings which may be further compounded by frequent stopping, particularly on other than level terrain as encountered in off-highway and intra-city service. It is therefore customary to equip such brakes with a mechanism that will automatically adjust the brake actuator to accommodate for brake lining wear and to maintain the travel of the actuator plungers and their associated brake shoes relatively constant throughout the normal life of the brake shoe linings. An example of one such automatic adjusting mechanism is described in US—A—3,068,964. In such adjusting mechanisms, one of the plungers is comprised of an assembly of parts in which the length of the plunger assembly is automatically increased or extended to compensate for a reduction in the brake shoe lining thickness as the friction lining wears during normal service.

Improvements to that type of automatic adjusting mechanism are disclosed in US—A—3,570,632, US—A—3,797,613, and US—A—3,822,003.

Such an automatic adjusting mechanism provides satisfactory and reliable service, and such service and reliability is even further enhanced by preventing contact between certain elements of the adjusting plunger assembly.

One example of means for achieving this is disclosed in US—A—3068964.

The present invention provides a wedge actuated brake assembly having a movable brake shoe with friction lining adapted to engage a surrounding brake drum, a self-adjusting brake actuating mechanism comprising a housing having a cylindrical bore therein, a wedge movable substantially normal to the axis of said bore, and means for reciprocably moving said wedge, a plunger assembly including a plunger mounted for axially slidable movement in said housing bore and having an interior cylindrical bore closed at one end and open at the other end, an elongate sleeve slidably and rotatably received within said interior bore of said plunger, said sleeve having a plurality of helical teeth on its external surface and a single thread of predetermined configuration extending helically substantially the entire length of the interior surface of said sleeve, and adjusting bolt, said adjusting bolt being of a length greater than the length of said sleeve and having a threaded shank engaging the helical internal thread of said sleeve with one end of said adjusting bolt extending through an open end of said sleeve, a toothed pawl carried by said housing in fixed axial location relative to said housing bore, spring means urging said toothed pawl radially into engagement with said helical teeth, said plunger assembly being movable by said wedge to move said brake shoe toward said drum and being axially extendible by rotation of said sleeve relative to said adjusting bolt to accommodate wear of the friction lining of said brake shoe, said adjusting bolt being prevented from contacting said plunger.

In accordance with the invention, the wedge actuated brake assembly is characterized in that the internal diameter of said sleeve is reduced at said open end of said sleeve adjacent said closed end of said plunger to prevent said adjusting bolt from extending through that end of said sleeve.

The advantages offered by the present invention will become apparent from the following description of the embodiment shown in the accompanying drawings.

In the drawings, wherein like reference numerals refer to like parts:

Figure 1 is a fragmentary side elevation showing the upper part of a brake assembly incorporating the present invention;

Figure 2 is a section taken along line 2—2 of Figure 1;

Figure 3 is an enlarged view, partly in section, of the axially extendible plunger assembly of Figure 2; and

Figure 4 is a sectional view of one end of one of the elements of Figure 3.

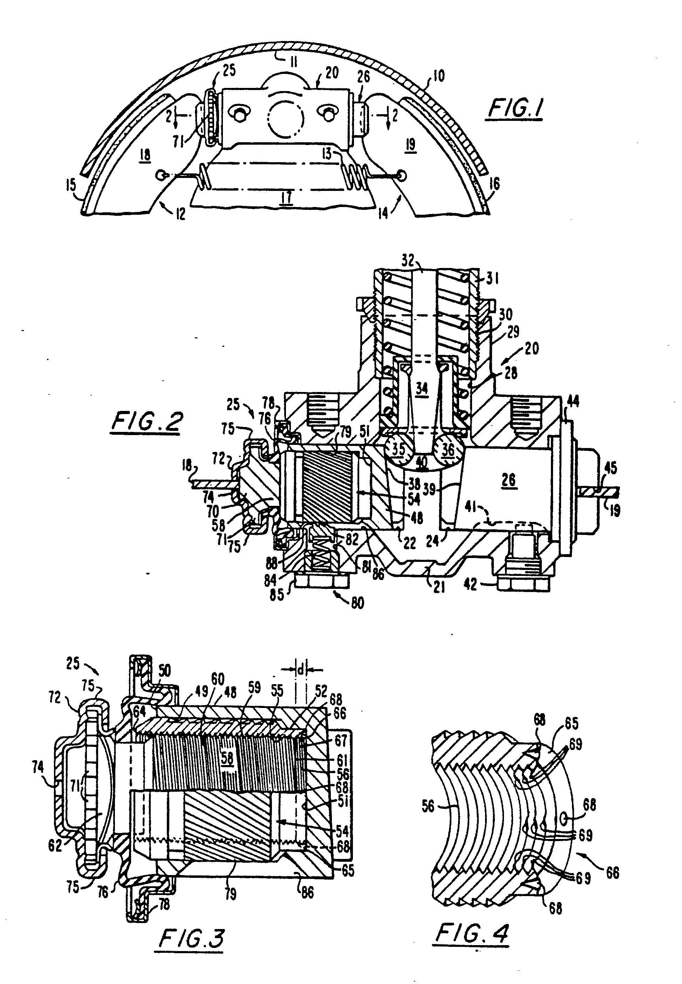

With reference to the drawings, Figure 1 shows a brake assembly comprising a brake drum 10, a pair of brake shoes 12 and 14 and a wedge type brake actuator 20. The brake drum is mounted by conventional means on a ground engaging vehicle wheel (not shown). The actuator 20 is secured by bolts to a support usually referred to as a spider 17 fixed to the vehicle axle beam or housing (not shown). Brake shoes 12 and 14 are supported for movement relative to the spider 17. As shown by Figure 1, the adjacent ends of the webs 18 and 19 of brake shoes 12 and 14 are urged into engagement with the opposite ends of the actuator 20 by means of a return spring 13. In the preferred embodiment, the opposite ends of the brake shoe webs 18 and 19 are similarly urged into engagement with the opposite ends of an actuator by means of still another return spring as disclosed in US—A—3,037,584. The brake shoes 12 and 14 are respectively provided with friction linings 15 and 16 adapted to engage the internal friction surface 11 of brake drum 10 upon outward movement of the brake shoes.

Figure 2 illustrates details of the wedge type actuator 20 which is comprised of a housing 21 formed with opposed similar coaxial cylindrical end bores 22 and 24 which respectively slidably mount a plunger assembly 25 and a plunger 26 for linear movement therein. One side of housing 21 is provided with an opening 28 coaxial with a hollow boss 29 internally threaded at 30 to mount a tubular support 31 of a fluid motor (not shown) having a reciprocating rod 32 carrying a wedge 34 disposed between rollers 35 and 36 located for rolling movement within the grooved inner ends 38 and 39, respectively, of the plunger assembly 25 and the plunger 26.

Rollers 35 and 36 are preferably loosely mounted on the rod 32 by a carrier 40 and, when rod 32 is moved further into the housing 21 to actuate the brake, the rollers 35 and 36 respectively displace the plunger assembly 25 and the plunger 26 outwardly relative to the housing bores 22 and 24 against the force of the return spring 13 to move the linings of the brake shoes 12 and 14 into frictional contact with the internal surface 11 of the brake drum. When the brake is disengaged, the return spring 13, acting through brake shoe webs 18 and 19, moves the plunger assembly 25 and the plunger 26 into the housing bores 22 and 24 as the wedge 34 is retracted with the operative elements of the actuator 20 returning to their respective positions as shown in Figure 2. When the brake is disengaged, the plunger assembly 25 and plunger 26 are each seated against a shoulder provided at the inner end of the housing bores 22 and 24.

Plunger 26 has a side slot 41 coacting with the inner end of a cap screw 42 which prevents rotation of the plunger 26 in bore 24. A flexible seal unit 44 is press fit to a counter bore at the outer end of bore 24 to prevent entry of dirt and moisture between the plunger 26 and bore 24. The outer end of plunger 26 is recessed or grooved at 45 to slidably receive the end of the brake shoe web 19.

Plunger assembly 26 is comprised of several elements which are movable relative to each other for the purpose of adjusting or extending the length of the plunger assembly to thereby maintain the desired running clearance between the brake shoe friction linings and the brake drum and optimum operation of the brake by assuring relatively constant travel of the wedge 34, the plunger assembly 25 and the plunger 26 within the actuator housing 21.

Plunger assembly 25 is thus comprised of an outer member or plunger 48 slidable in housing bore 22. The plunger 48 has an internal cylindrical bore 49 open at the end 50 of the plunger and closed by the surface 51 at the other end of the plunger.

An inner sleeve 54, sometimes referred to as an adjusting nut or actuator, is slidably and rotatably mounted internally of the bore 49 and a smaller diameter bore or bearing surface 52 adjacent to the surface 51. The inner sleeve 54 is open at both ends and is formed with an internally threaded bore 55 of uniform diameter defined by a continuous helical thread 56 along substantially the entire length of bore 55. In the preferred embodiment, the thread 56 is a 7/8 14 UNF 2B (Modified) thread with a pitch diameter of about 21.134 cm.

The shank 59 of adjusting bolt 58 is provided with a helical thread 60 complimentary to the internal sleeve thread 56. The adjusting bolt 58 is longer than the axial length of the hollow open ended sleeve 54. The threads 56 and 60 are slidably engaged internally of the sleeve 54 with the end 62 of the adjusting bolt 58 extending outward through the open end 64 of the sleeve 54 adjacent the open end 50 of plunger 48.

The radially extending surface 65 at the other open end 66 of the sleeve 54 is intended to abut or seat against the surface 51 of plunger 48. The inner sleeve surface 65 is staked at 68 to prevent the inner end 61 of the adjusting bolt 58 from contacting the surface 51 at the closed end of plunger 48. In the preferred embodiment, four stakes 68 are applied by a cone-shaped tool at 90° intervals around the surface 65 to disrupt the configuration of the otherwise continuous helical thread 56 and reduce the internal diameter of the sleeve bore 55 adjacent the end 66 of the sleeve 54. The stakes 68 produce a series of spaced radially inward directed projections or bumps 69 and thereby change the configuration or provide a different configuration in the thread 56 adjacent the open end 66 of the sleeve 54. The depth of the stake 68 preferably provides a space 67 or distance "d" of about .5 to 1.5 mm between the end 61 of adjusting bolt 58 and the end surface 65 of sleeve 54 when the adjusting bolt 58 is manually threaded to the bore 55 of sleeve 54.

The outer end 62 of the adjusting bolt 58 comprises an enlarged flange 70 having a toothed periphery 71 to provide a star wheel. A brake shoe retainer 72 having a slot 74, is mounted to the adjusting bolt flange 70 and resiliently held in place by a U-shaped arms 75. The arcuate end of the brake shoe web 18 extends through the slot 74 of retainer 72 and bears against the axially outer end face of the adjusting bolt 58. The slot 74 in the retainer 72 prevents lateral misalignment of the end of brake shoe web 18 and the adjusting bolt 58 while the resilient U-shaped arms 75 each having a detent between adjacent teeth in the toothed periphery 71 of the adjusting bolt flange 70 permit the flange 70 and adjusting bolt 58 to be rotated relative to the retainer 72 and the brake shoe web 18 thereby allowing for manual adjustment by rotating the flange 70 to rotate the adjusting bolt 58 internally of the sleeve 54 until the desired running clearance is obtained.

A bellows type expanding flexible seal 76 having its outer end enclosed within a metal case 78 seated in a counter bore provided around the housing bore 22 and its inner periphery snug against the adjusting bolt between the flange 70 and the threaded portion 60 of the shank 59 prevents dirt, moisture and other materials from entering the housing bore 22.

The outer periphery of sleeve 54 is formed with a plurality of helical teeth 79. A pawl assembly 80 is provided internally of a bore 81 through actuator housing 21. The bore 81 is substantially normal to the axis of the cylindrical bore 22 and the inner end of the bore 81 intersects cylindrical bore 22. The pawl assembly is comprised of a pawl 82, a compressions spring 84 and a hollow cap screw 85 threaded to the outer end of the bore 81. The pawl 82 extends through a side slot 86 provided to plunger 48. The inner end of the pawl 82 is provided with a plurality of buttress teeth 88 which are biased into engagement with the helical teeth 79 provided to the external surface of sleeve 54. The pawl 82 interacts with the side slot 86 of plunger 48 to prevent rotation of the plunger 48 in housing bore 22.

During normal operation of the brake, the plunger assembly 25 including the sleeve 54 is displaced axially outwardly in housing bore 22 by the wedge 34 and roller 35. The pawl 82 in bore 81 is in a fixed axial location relative to housing bore 22. If the axially outward movement of the sleeve 54 is greater than the corresponding axial length of the helical teeth 79, the pawl 82 will compress spring 84 and the buttress teeth 88 on the pawl 82 will skip to an adjacent set of helical teeth 79. Then, when the brake is released, the buttress teeth 88 will rotate the helical teeth 79 and sleeve 54 to extend the adjusting bolt 58 which is threaded internally of the sleeve 54 and thereby extend the effective length of the plunger assembly 25 to maintain the desired clearance between the friction linings on the brake shoes and the friction surface of the brake drum. During return movement of the plunger assembly 25, the sleeve 54 is free to rotate internally of the plunger 48 while the retainer 72 prevents rotation of the adjusting bolt 58. Detents in the resilient legs 75 of the retainer 72 are seated between adjacent teeth in the adjusting bolt flange 70 and the end of the brake shoe web 18 extends through the retainer slot 74 to prevent rotation of the retainer 72.

The stakes 68 provided to the end surface 65 of sleeve 54 prevent the inner end 66 of adjusting bolt 58 from extending through the inner open end 66 of sleeve 54 and ensure that the end surface 65 of the sleeve contacts the surface 51 at the closed end of the plunger bore 49. This establishes a compressive force or resistance on the threads 56 and 60 in the axial direction of bore 22 and prevents the helical teeth 79 of sleeve 54 from rotating through the buttress teeth 88 of pawl 82 during the brake actuation stroke of wedge 34 and outward movement of the plunger assembly 25. If the end 66 of the adjusting bolt 58 abuts the plunger surface 51, there would be less resistance to rotary movement of the sleeve 54 internally of the plunger bore 49 and the actuator or sleeve 54 would be free to rotate against the pawl buttress teeth 88 during the brake actuation and the brake release stroke of the wedge 34 without extending the effective length of the plunger assembly.

## Claims

1. A wedge actuated brake assembly having a movable brake shoe (12, 14) with friction lining (15, 16) adapted to engage a surrounding brake drum (10), a self-adjusting brake actuating mechanism (20) comprising a housing (21) having a cylindrical bore (22, 24) therein, a wedge (34) movable substantially normal to the axis of said bore (22, 24), and means (32) for reciprocably moving said wedge (34), a plunger assembly (25) including a plunger (48) mounted for axially slidable movement in said housing bore (22, 24) and having an interior cylindrical bore (49) closed at one end (51) and open at the other end (50), an elongate sleeve (54) slidably and rotatably received within said interior bore (49) of said plunger (48), said sleeve (54) having a plurality of helical teeth (79) on its external surface and single thread (56) of predetermined configuration extending helically substantially the entire length of the interior surface of said sleeve (54), and adjusting bolt (58), said adjusting bolt being of a length greater than the length of said sleeve (54) and having a threaded shank (60) engaging the helical internal thread (56) of said sleeve (54) with one end of said adjusting bolt (58) extending through an open end (64) of said sleeve (54), a toothed pawl (82) carried by said housing (21) in fixed axial location relative to said housing bore (22, 24), spring means (84) urging said toothed pawl (82) radially into engagement with said helical teeth (79), said plunger assembly (25) being movable by said wedge (34) to move said brake shoe (12, 14) toward said drum (10) and being axially extendible by rotation of said sleeve (54) relative to said adjusting bolt (58) to accommodate wear of the friction lining (15, 16) of said brake shoe (12, 14), said adjusting bolt (58) being prevented from contacting said plunger (48), characterized in that the internal diameter of said sleeve (54) is reduced at said open end (66) of said sleeve (54) adjacent said closed end of said plunger (48) to prevent said adjusting bolt (58) from extending through that end (66) of said sleeve (54).

2. The wedge actuated brake assembly defined by claim 1, including a different configuration of said helical thread (56) provided internally of said sleeve (54) adjacent said open end (66) of said sleeve (54) to prevent said adjusting bolt (58) from extending through that end of said sleeve.

3. The wedge actuated brake assembly defined by claim 1 wherein said open end (66) of said sleeve (54) is staked to reduce the internal diameter and disrupt the configuration of said thread (56) adjacent said open end (66) of said sleeve (54).

## Patentansprüche

1. Keilbetätigte Bremsanordnung mit einem beweglichen Bremsschuh (12, 14), der zur Einwirkung auf eine umgebende Bremstrommel (10) mit einem Reibbelag (15, 16) versehen ist, einem selbsteinstellenden Bremsbetätigungsmechanismus (20) mit einem eine zylindrische Bohrung (22, 24) aufweisenden Gehäuse (21), einem im wesentlichen senkrecht zur Achse der Bohrung (22, 24) beweglichen Keil (34) und Mitteln (32) zum Hin- und Herbewegen des Keils (34), einer Kolbenanordnung (25) mit einem in der Gehäusebohrung (22, 24) axial verschiebbar angebrachten Kolben (48), in dem eine an einem Ende (50) offene und am anderen Ende (51) geschlossene zylindrische Innenbohrung (49) angebracht ist, einer in der Innenbohrung (49) des Kolbens (48) verschiebbar und verdrehbar ausgenommenen länglichen Hülse (54), auf deren Außenfläche mehrere schraubenlinienförmig verlaufende Zähne (79) angebracht sind und auf deren Innenfläche im wesentlichen auf deren gesamter Länge ein einziger Gewindegang (56) mit vorbestimmter Form und schraubenlinienförmigen Verlauf angebracht ist, einem Einstellbolzen (58), dessen Länge größer als die Länge der Hülse (54) ist und der einen mit Gewinde versehenen Schaft (60) aufweist, der in den schraubenlinienförmigen inneren Gewindegang (56) der Hülse (54) eingreift, wobei ein Ende des Einstellbolzens (58) durch ein offenes Ende (64) der Hülse (54) ragt, einer von dem Gehäuse (21) in axial fester Lage bezüglich der Gehäusebohrung (22, 24) gehaltenen gezahnten Klinke (82), Federmitteln (84), die die gezahnte Klinke (82) radial in Eingriff mit den schraubenlinienförmig verlaufenden Zähnen (79) drücken, wobei die Kolbenanordnung (25) von dem Keil (34) so bewegt werden kann, daß sich der Bremsschuh (12, 14) gegen die Bremstrommel (10) bewegt und wobei die Kolbenanordnung (25) durch Drehen der Hülse (54) bezüglich des Einstellbolzens (58) zur Anpassung an eine Abnutzung des Reibbelags (15, 16) des Bremsschuhs (12, 14) in axialer Richtung verlängerbar ist, wobei der Einstellbolzen (58) daran gehindert ist, den Kolben (48) zu berühren, dadurch gekennzeichnet, daß der Innendurchmesser der Hülse (54) an dem ofenen Ende (66) der Hülse (54) reduziert ist, das dem geschlossenen Ende des Kolbens (48) benachbart ist, damit der Einstellbolzen (58) daran gehindert wird, sich durch dieses Ende (66) der Hülse (54) zu erstrecken.

2. Keilbetätigte Bremsanordnung nach Anspruch 1, mit einer unterschiedlichen Form des schraubenlinienförmigen Gewindegangs (56) in der Innenfläche der Hülse (54), angrenzend an das offene Ende (66) der Hülse (54), damit verhindert wird, daß sich der Einstellbozen (58) durch dieses Ende des Hülse erstreckt.

3. Keilbetätigte Bremsanordnung nach Anspruch 1, bei welcher das offene Ende (66) der Hülse (54) gekerbt ist, damit der Innendurchmesser reduziert und die Form des Gewindegangs (56) angrenzend an das offene Ende (66) der Hülse durchbrochen wird.

**Revendications**

1. Système de frein commandé par coin comprenant un sabot de frein (12, 14) mobile muni d'une garniture de friction (15, 16) conçue pour entrer en contact avec un tambour périphérique de freinage (10), un mécanisme auto-régleur (20) pour l'actionnement du frein, ce mécanisme comprenant un boîtier (21) muni d'un alésage cylindrique interne (22, 24), un coin (34) mobile perpendiculairement à l'axe dudit alésage (22, 24) et des moyens (32) pour déplacer le coin (34) en va-et-vient, un système de plongeur (25) comprenant un plongeur (48) monté à coulissement axial dans ledit alésage (22, 24) du boîtier et ayant un alésage cylindrique intérieur (49) fermé à une extrémité (51) et ouvert à l'autre extrémité (50), un manchon (54) allongé pouvant coulisser et tourner dans ledit alésage intérieur (49) du plongeur (48), le manchon (54) ayant un certain nombre de dents hélicoïdales (79) sur sa surface externe et un seul filetage (56) de configuration prédéterminée s'étendant hélicoïdalement sensiblement sur toute la longueur de la surface interne du manchon (54), une cheville de réglage (58), ladite cheville de réglage étant d'une longueur supérieure à la longueur du manchon (54) et ayant une tige filetée (60) en prise avec le filetage hélicoïdal interne (56) du manchon (54) tandis qu'une extrémité de la cheville (58) s'étend à travers une extrémité ouverte (64) du manchon (54), un rochet denté (82) porté par ledit boîtier (21) en position axiale fixe relativement à l'alésage (22, 24) du boîtier, des moyens élastiques (84) sollicitant radialement le rochet denté (82) en prise avec les dents hélicoïdales (79), ledit système de plongeur (25) étant déplaçable par le coin (34) pour déplacer le sabot de frein (12, 14) vers le tambour (10) et étant axialement extensible par rotation du manchon (54) par rapport à la cheville de réglage (58) pour rattraper l'usure de la garniture de friction (15, 16) du sabot de frein (12, 14) la cheville de réglage (58) étant empêchée de venir en contact avec le plongeur (48), caractérisé en ce que le diamètre interne du manchon (54) est rétréci à ladite extrémité ouverte (66) du manchon (54) adjacente à ladite extrémité fermée du plongeur (48) pour empêcher la cheville de réglage (58) de sortir par cette extrémité (66) du manchon (54).

2. Système de frein commandé par coin selon la revendication 1 dans lequel le filetage hélicoïdal (56) ménagé à l'intérieur du manchon (54) a une configuration différente au voisinage de ladite extrémité ouverte (66) du manchon (54) pour empêcher la cheville de réglage (58) de s'étendre à travers cette extrémité du manchon.

3. Système de frein commandé par coin selon la revendication 1 dans lequel ladite extrémité ouverte (66) du manchon (54) est pointée pour réduire le diamètre interne et modifier la configuration dudit filetage (56) au voisinage de ladite extrémité ouverte (66) du manchon (54).

FIG.1

FIG.2

FIG.3

FIG.4